# EUROPÄISCHE PATENTSCHRIFT

(11) **EP 3 094 796 B1**
(45) Veröffentlichungstag und Bekanntmachung des Hinweises auf die Patenterteilung: **25.04.2018**
(21) Anmeldenummer: 15729406.7
(22) Anmeldetag: 09.06.2015
(51) Int. Cl.: E04H 6/22, E04H 6/34, E04H 6/24, E04H 6/36

(54) **AUTOMATISIERTES PARKSYSTEM FÜR FAHRZEUGE**
AUTOMATED PARKING SYSTEM FOR VEHICLES
SYSTÈME AUTOMATIQUE DE STATIONNEMENT POUR VÉHICULES

(30) Priorität: 27.08.2014 DE 102014112269
(43) Veröffentlichungstag der Anmeldung: 23.11.2016
(73) Patentinhaber: Nussbaum Technologies GmbH, 77694 Kehl-Sundheim (DE)
(72) Erfinder: NUSSBAUM, Hans, 77694 Kehl-Bodersweier (DE)
(74) Vertreter: Lemcke, Brommer & Partner Patentanwälte Partnerschaft mbB
(86) Internationale Anmeldenummer: PCT/EP2015/062844
(87) Internationale Veröffentlichungsnummer: WO 2016/030034

(56) Entgegenhaltungen:
- EP-A1- 2 213 815
- US-A1- 2005 207 876
- US-A1- 2007 098 528
- US-A1- 2013 166 105
- US-B1- 8 016 303

## Beschreibung

Die Erfindung betrifft ein automatisiertes Parksystem für Fahrzeuge, insbesondere Kraftfahrzeuge, bei dem ein zu parkendes Fahrzeug an einen Übergabeplatz auf einer Palette abgestellt und die Palette dann von einer mechanischen Einrichtung übernommen und zu einem Stellplatz verbracht wird. Außerdem betrifft die Erfindung eine entsprechende mechanische Einrichtung für ein automatisiertes Parksystem sowie ein Verfahren zum Einlagern von Fahrzeugen in einem automatisierten Parksystem.

In Ballungszentren und vor allem in Innenstadtbereichen ist Parkraum für Fahrzeuge häufig knapp und teuer. Der Bau von Parkhäusern und Tiefgaragen stellt große Investitionen dar, so dass das Bestreben besteht, die auf diese Weise geschaffenen Parkflächen möglichst effizient zu nutzen. Dies führt dazu, dass in vielen Parkgaragen Parkbuchten ausgewiesen werden, die vor allem für größere Fahrzeuge sehr eng sind und das betreffende Fahrzeug nur mit Mühe eingeparkt werden kann. Muss in solchen Parkgaragen entsprechend eng geparkt werden, so besteht eine erhöhte Gefahr, dass beim Ein- und Ausparken, aber auch beim Öffnen der Fahrzeugtüren das einparkende oder benachbarte Fahrzeuge beschädigt werden. Häufig leidet die Effizienz der Belegung gerade in engen Parkgaragen auch darunter, dass Parklücken verbleiben, die zu schmal sind, als dass darin noch ein Fahrzeug eingeparkt werden könnte.

Aus diesem Grunde wurden automatisierte Parkgaragen vorgeschlagen, bei denen ein zu parkendes Fahrzeug vom Benutzer an einem Übergabeplatz abgestellt, von einer mechanischen Einrichtung übernommen und im Parkhaus in einem bestimmten Stellplatz eingelagert wird. Auf Anforderung des Benutzers wird das Fahrzeug vom Stellplatz abgeholt und am Übergabeplatz oder einem anderen Auslagerplatz wieder dem Benutzer zur Verfügung gestellt.

Bekannt sind unter anderem Parksysteme, bei denen die Fahrzeuge auf Paletten abgestellt werden, die von horizontal verfahrbaren Lastträgern aufgenommen und einer Hubplattform zugeführt werden. Die Hubplattform fährt dann zu dem gewünschten Stellplatz, wobei der Lastträger gegebenenfalls noch verschwenkt wird, damit der horizontal ausfahrende Lastträger in den richtigen Stellplatz trifft. Nach Absenken des Fahrzeugs mitsamt seiner Palette fährt der Lastträger wieder zurück und die Hubplattform steht für neue Einsätze zur Verfügung.

Solchen platzsparenden Parksystemen stehen jedoch außerordentlich hohe Investitionskosten für die Transporteinrichtung gegenüber, und zwar im Wesentlichen bedingt durch die aufwendige fördertechnische Einrichtung und deren Steuerung.

Daneben wurden auch niederflurige Rangierfahrzeuge vorgeschlagen, mit denen zu parkende Fahrzeuge vorzugsweise an ihren Rädern aufgenommen und angehoben werden sollen, um die Fahrzeuge dann platzsparend zu entsprechenden Stellplätzen zu verbringen. Derartige Rangiergeräte sind beispielsweise aus den Schriften US 5,268,156; US 5,037,263 und US 8,016,303 bekannt. Als problematisch erweist sich hierbei jedoch, dass zu parkende Fahrzeuge völlig unterschiedliche Geometrien wie Bodenfreiheit, Radstand, Reifengröße etc. aufweisen, was ein automatisiertes Anheben und Absetzen der Fahrzeuge durch ein Rangiergerät aufwendig und fehleranfällig macht. Auch die empfindlichen Fahrwerke moderner Fahrzeuge können durch entsprechende Krafteinwirkung bei unsachgemäßem Anheben in Mitleidenschaft gezogen werden. Nicht ganz unberechtigt ist daher die Bereitschaft von Benutzern, ihre Fahrzeuge einer entsprechenden automatisierten Parktechnik anzuvertrauen, gering.

Aus der Schrift US 2007/0098528 ist ein mehrstöckiges Parksystem mit Aufzug bekannt, bei dem jedes Fahrzeug auf einer eigenen Parkplattform abgestellt wird und bei dem alle Parkplattformen autonom fahrbar und rangierfähig sind. Durch eine entsprechende Steuerung können die Parkplattformen innerhalb einer Parkebene in der Art eines Schiebepuzzles beliebig rangiert werden, so dass nur wenig freie Rangierfläche benötigt wird, um jede beliebige Plattform zum Aufzug rangieren zu können. Da jedoch für jedes einzelne zu parkende Fahrzeug eine eigene, autonom angetriebene und gesteuerte Parkplattform benötigt wird, ist das beschriebene Parksystem technisch aufwendig und daher sehr teuer. Außerdem kann beim Ausfall einer Parkplattform aufgrund technischen Defekts eine ganze Parketage samt den darin eingelagerten Fahrzeugen blockiert werden, so dass die Ausfallwahrscheinlichkeit des Parksystems entsprechend hoch ist.

Die Schrift US 2013/0166105 A1 offenbart ein Parksystem, bei dem Fahrzeuge an einem Übergabeplatz erhöht auf einer Palette abgestellt werden und bei dem Paletten von einem niederflurigen Rangierfahrzeug unterfahren, angehoben und zu einem Parkplatz transportiert werden. Das Rangierfahrzeug ist mit Sensoren ausgestattet, die feststellen, ob das Rangierfahrzeug korrekt unter einer Palette positioniert ist, bevor diese angehoben wird. Zu einer Orientierung bzw. Lenkung des Rangierfahrzeuges sind in der US 2013/0166105 A1 Orientierungshilfen wie RFID-Tags, Barcodes, Laser oder Führungsdrähte offenbart. Diese Art der Orientierung bzw. Lenkung des Rangierfahrzeuges ist technisch aufwändig und kostenintensiv.

Die Schrift US8016303 zeigt ein Rangierfahrzeug, mit dem Kraftfahrzeuge an den Reifen angehoben und zu einer Parkposition verbracht werden können.

Die Schrift US2005/0207876A1 zeigt ein Parksystem, bei dem Kraftfahrzeuge auf autonom rangierfähigen Parkplattformen abgestellt werden, die dann mitsamt dem Kraftfahrzeug zu einer jeweiligen Parkposition bewegt werden. Die Parkplattformen besitzen Annäherungssensoren, um eine Kollision mit einem Hindernis zu vermeiden.

Die Schrift EP2213815 A1 zeigt ein zweiteiliges Rangierfahrzeug, mit dem ein Kraftfahrzeug beiderseits an den Rädern angehoben und so bewegt werden kann. Das Rangierfahrzeug kann unter anderem auch mit Mecanum-Rädern ausgestattet sein.

Es ist daher eine Aufgabe der vorliegenden Erfindung, ein Parksystem sowie eine dazugehörige mechanische Transporteinrichtung und ein Verfahren zum automatisierten Einlagern von Fahrzeugen anzugeben, welches einerseits technisch einfach und somit wenig störanfällig und kostengünstig ist, andererseits mit geringen baulichen Veränderungen und Einbauten vorhandene Lagerflächen als Parkraum nutzbar machen kann.

Die Aufgabe wird bezüglich des automatisierten Parksystems gelöst durch die Merkmale des Anspruchs 1, bezüglich der mechanischen Transporteinrichtung durch die Merkmale des Anspruchs 17 und bezüglich des Verfahrens durch die Merkmale des Anspruchs 18. Vorteilhafte Ausgestaltungen sind den abhängigen Ansprüchen zu entnehmen.

Bei dem automatisierten Parksystem der eingangs genannten Art sind erfindungsgemäß eine Vielzahl von Paletten vorgesehen, die auf Stellplätzen des Parksystems derart gegenüber einem Geschossboden erhöht einlagerbar sind, dass sie von einem niederflurigen Rangierfahrzeug vollständig unterfahren werden können. Des Weiteren ist mindestens ein robotisch gesteuertes, niederfluriges Rangierfahrzeug zum Transport der Paletten vorgesehen, welches einen omnidirektionalen Antrieb aufweist und mit einer vorzugsweise hydraulischen Hubvorrichtung ausgestattet ist, um eine unterfahrene Palette anzuheben. Das Rangierfahrzeug ist mit Abstandsensoren wie beispielsweise Laser- oder Radarsensoren ausgerüstet, über die es jederzeit seine genaue Position innerhalb einer Parketage bestimmen kann. Mit der Hilfe der Abstandssensoren kann das Rangierfahrzeug durch Messung seines Abstands zu Außenwänden der Parkgarage seine Position bestimmen, aber auch eventuelle Hindernisse erkennen und diesen ausweichen oder rechtzeitig anhalten kann. Bei der Verwendung von Lasersensoren kann es zudem hilfreich sein, an den Wänden der Parkgarage Reflektoren vorzusehen, um die Reichweite der sensorgestützten Abstandsmessung zu erhöhen.

Das erfindungsgemäße Parksystem besitzt außer dem Rangierfahrzeug, mit Ausnahme einer eventuell vorhandenen Aufzugsanlage, keinerlei bewegte bzw. beweglichen Teile und ist daher entsprechend einfach aufzubauen und robust gegenüber Störungen. Das Rangierfahrzeug kann im Falle eines Defekts einfach ausgetauscht bzw. durch Betrieb mit zwei oder mehr Rangierfahrzeugen eine entsprechende Redundanz vorgehalten werden. Der omnidirektionale Antrieb der Rangierfahrzeuge ermöglicht ein platzsparendes Rangieren auf engstem Raum, so dass die zur Verfügung stehende Parkfläche bestmöglich ausgenutzt werden kann. Die Paletten selbst können in Leichtbauweise und damit entsprechend kostengünstig ausgeführt werden. Da keinerlei bauliche Veränderungen, Ein- oder Anbauten wie Schienen, Führungen, Kettenzüge oder dergleichen benötigt werden, können vorhandene Lagerflächen schnell und gegebenenfalls auch nur vorrübergehend zu Parkraum umfunktioniert werden.

Das Rangierfahrzeug ist robotisch gesteuert, also in der Art eines fahrerlosen Transportfahrzeugs mit einer Leitsteuerung zur automatischen Steuerung des Rangierfahrzeugs versehen. Außerdem verfügt es über einen eigenen Fahrantrieb sowie Einrichtungen zur Standortbestimmung und Lageerfassung, so dass es sich autonom innerhalb des Parksystems bewegen kann. Einrichtungen zur Datenübertragung dienen dazu, Befehle von einer zentralen Steuerung des Parksystems zu erhalten und Bestätigungs-, Fehler- und/oder Alarmmeldungen an die zentrale Steuerung zu übertragen.

Als Antrieb für das Rangierfahrzeug können vorzugsweise einzeln ansteuerbare Radantriebe mit omnidirektionalen Rädern zum Einsatz kommen. Insbesondere können die Antriebe durch sogenannte Mecanum-Räder gebildet werden. Hiermit ist es möglich, auf einfache Weise ein Rangierfahrzeug zu schaffen, welches innerhalb einer Parketage hochpräzise in jede beliebige Richtung fahrbar ist und auf der Stelle Drehen bzw. Wenden sowie rechtwinklige Richtungsänderungen durchführen kann. Das Parksystem kommt somit mit einer sehr geringen Rangierfläche aus. Alternativ können auch sogenannte Fahr-Dreh-Module eingesetzt werden, die ein klassisches Antriebsrad nutzen, das zusätzlich aktiv um seine Hochachse gedreht und ausgerichtet werden kann.

Das erfindungsgemäße Parksystem kann insbesondere eine mehrgeschossige Lagerhalle zum Einlagern der Paletten mit geparkten Fahrzeugen nutzen, wobei die einzelnen Parkgeschosse über eine vorzugsweise hydraulische Aufzugsanlage verbunden sind, die eine Hubplattform oder Aufzugskabine aufweist, welche von dem Rangierfahrzeug befahrbar ist. Es ist somit möglich, ein eingeliefertes und an einem Übergabeplatz auf einer Palette abgestelltes Fahrzeug mittels des Rangierfahrzeuges über die Aufzugsanlage in jede beliebige Parketage zu verbringen und dort einzulagern. Vorzugsweise kann ein Aufzugschacht mit entsprechend positionierter Hubplattform bzw. die Aufzugskabine der Aufzugsanlage als Übergaberaum zur Einlieferung und Abholung des parkenden Fahrzeugs dienen. Somit erfolgt Einlieferung und Rückgabe eines Fahrzeugs in einem eigens abgeschlossenen Übergaberaum, so dass die Benutzer selbst keinen Zutritt zu den Parketagen erhalten. Im Rahmen der vorliegenden Erfindung ist es aber ebenso möglich, einen von einer Aufzugsanlage unabhängigen, abgeschlossenen bzw. mittels geeigneter Tore abschließbaren Übergaberaum vorzusehen, der von einem Rangierfahrzeug befahren werden kann.

Da die Paletten gegenüber dem Geschossboden einer Parketage erhöht sind, damit sie von dem Rangierfahrzeug unterfahren werden können, erfolgt das Auffahren eines zu parkenden Fahrzeuges am Übergabeplatz vorzugsweise über eine Rampe. Erfolgt die Einlieferung bzw. Rückgabe eines Fahrzeugs im Aufzugsschacht einer Aufzugsanlage, so kann die Hubplattform bzw. Aufzugskabine der Aufzugsanlage mit einer darin befindlichen Leerpalette gegenüber dem externen Fahrbahnniveau auch so abgesenkt werden, dass die Oberseite der Palette sich auf Höhe des externen Fahrbahnniveaus befindet, so dass ein Fahrzeug bequem auf die Palette auf- bzw. von einer Palette herunterfahren kann.

Die Energieversorgung des Rangierfahrzeugs erfolgt vorzugsweise über aufladbare Batterien bzw. Akkumulatoren. Hierbei wird eine Ladevorrichtung vorgesehen, mit der das Rangierfahrzeug in einer Wartestellung koppelbar ist. Wird das Rangierfahrzeug zeitweilig nicht benötigt, da keine Fahrzeuge ein- bzw. ausgelagert werden sollen, oder sind die Batterien des Rangierfahrzeugs leer, so begibt es sich in die Wartestellung um seine Batterien zu laden.

Besonders vorteilhaft ist auch die Verwendung von Hochleistungskondensatoren als Energiequelle in dem Rangierfahrzeug. Solche Hochleistungskondensatoren, die besonders schnell geladen werden können und eine sehr hohe Zahl von Ladezyklen aufweisen, werden unter anderem beispielsweise in Straßenbahnen zur Energierückgewinnung beim Bremsen verwendet. Da solche Hochleistungskondensatoren sehr schnell geladen werden können, kann eine induktiv oder taktil wirkende Ladevorrichtung vorgesehen werden, mittels der die Hochleistungskondensatoren während einer Überfahrt oder Vorbeifahrt des Rangierfahrzeugs geladen werden.

Das Rangierfahrzeug kann vorzugsweise an jeder Längs- bzw. Querseite je zwei Abstandssensoren aufweisen.

Von besonderem Vorteil ist die hohe Flexibilität und Modularität des erfindungsgemäßen Parksystems. So kann das Parksystem jederzeit zur Erhöhung der Ein- bzw. Auslagerkapazität mit zwei oder mehr Rangierfahrzeugen betrieben werden. Während beispielsweise ein erstes Rangierfahrzeug mit dem Transport eines einzulagernden Fahrzeugs vom Übergabeplatz zu einem zugewiesenen Stellplatz beschäftigt ist, kann ein zweites Transportfahrzeug bereits eine neue Leerpalette zu dem Übergabeplatz anliefern, so dass das Parksystem sofort wieder zur Aufnahme eines weiteren Fahrzeugs bereit ist. Der Betrieb des Parksystems kann auch zunächst mit nur einem Rangierfahrzeug gestartet werden und der Betreiber kann später zur Verkürzung der Wartezeiten bzw. Erhöhung der Ein- und Auslagerkapazitäten zusätzliche Rangierfahrzeuge anschaffen und dem Parksystem hinzufügen.

Der Betrieb des Parksystems wird vorzugsweise durch eine zentrale Steuerung gesteuert, die per Drahtlosschnittstelle mit dem oder den Rangierfahrzeugen kommuniziert und diese zu einem bestimmten Stellplatz ordert, um dort eine Palette abzuholen oder einzulagern. Eine solche Steuerung ist dazu programmiert, zu parkenden Fahrzeugen Stellplätze zuzuweisen und zum Auslagern eines Fahrzeugs den betreffenden Stellplatz, auf dem die Palette mit diesem Fahrzeug eingelagert ist, zu ermitteln und die Stellplatzposition an ein Rangierfahrzeug weiterzugeben, welches dann den Stellplatz anfährt und die betreffende Palette abholt.

Besonders vorteilhaft ist es, wenn die Paletten in Gassen hinter- bzw. nebeneinander eingelagert werden und die zentrale Steuerung dazu ausgebildet ist, bei Bedarf Paletten umzulagern, um Zugang zu weiter hinten in einer Gasse eingelagerten Paletten zu schaffen. Auf diese Weise kann die zur Verfügung stehende Parkfläche besonders effizient genutzt werden, da nicht jede Palette jederzeit zugänglich sein muss, sondern bei Bedarf durch Umrangieren ein Zugang geschaffen werden kann. Auch hierbei erweist sich die gleichzeitige Verwendung von mehreren Rangierfahrzeugen zur Erhöhung der Zugriffszeit als vorteilhaft. Außerdem liegt ein großer Vorteil in einer Ausgestaltung der Rangierfahrzeuge und der erhöhten Lagerung der Paletten, welche es ermöglicht, dass ein Rangierfahrzeug unter einer abgestellten Palette hindurchfahren kann, und zwar sowohl in Quer- als auch in Längsrichtung.

Erfolgt die Rückgabe eines geparkten Fahrzeugs an einen Benutzer am selben Übergabeplatz wie die Einlagerung, so ist es für den Benutzer besonders komfortabel, wenn das Rangierfahrzeug die Palette mit dem auszulagernden Fahrzeug dort um 180° gedreht gegenüber der Einfahrtrichtung abstellt. Ein Benutzer kann mit seinem Fahrzeug dadurch nicht nur vorwärts auf die Palette auffahren, sondern auch vorwärts wieder von der Palette herunterfahren. Durch die erfindungsgemäße Verwendung omnidirektional angetriebener Rangierfahrzeuge lässt sich diese Komfortfunktion ohne technischen Zusatzaufwand und ohne zusätzliche Wendefläche problemlos realisieren.

Alternativ zu einem omnidirektionalen Antrieb kann das Rangierfahrzeug auch mit einem differentiellen Antrieb ausgestattet sein. Dieser besitzt zwei entlang einer Querachse angeordneter, angetriebener Rädern, die über zugehörige Antriebe getrennt und unabhängig voneinander angetrieben sind. Zur Stabilisierung besitzt das Rangierfahrzeug außerdem mindestens ein, vorzugsweise zwei um ihre Hochachse frei drehbare Stützräder. Der differentielle Antrieb erlaubt ein Drehen des Rangierfahrzeugs auf der Stelle. Zum seitlichen Versetzen einer in Längsrichtung aufgenommenen Palette wird die Palette zunächst abgesetzt, eine Drehung des Rangierfahrzeugs unter der Palette auf der Stelle um 90° ausgeführt und die Palette anschließend in der neuen Orientierung wieder aufgenommen.

Weitere Merkmale, Vorteile und Eigenschaften der vorliegenden Erfindung werden im Folgenden anhand der Figuren und anhand von Ausführungsbeispielen erläutert. Dabei zeigt:
- Fig. 1: eine Seitenansicht von einer gegenüber einem Geschossboden erhöht gelagerten Palette mit einem darauf abgestellten Fahrzeug,
- Fig. 2: eine Draufsicht auf die Palette aus Fig. 1,
- Fig. 3: eine von einem Rangierfahrzeug unterfahrene und angehobene Palette mit darauf abgestelltem Fahrzeug,
- Fig. 4a: eine Seitenansicht des Rangierfahrzeugs aus Fig. 3,
- Fig. 4b: eine Frontalansicht des Rangierfahrzeugs aus Fig. 3,
- Fig. 4c: eine Draufsicht auf das Rangierfahrzeug aus Fig. 3,
- Fig. 5: ein erstes Ausführungsbeispiel einer Parketage mit auf Paletten eingelagerten Fahrzeugen,
- Fig. 6: ein zweites Ausführungsbeispiel einer Parketage mit auf Paletten eingelagerten Fahrzeugen,
- Fig. 7: eine Prinzipzeichnung eines Mecanum-Rades in einer Draufsicht, auf die Lauffläche des Rades;
- Fig. 7a: eine isometrische Darstellung einer tonnenförmigen Rolle, von denen eine Vielzahl entlang der Lauffläche des Mecaum-Rades angebracht wird;
- Fig. 8: einen Längsschnitt durch das Mecanum-Rad aus Fig. 7,
- Fig. 9: einen Querschnitt durch das Mecanum-Rad aus Fig. 7 und
- Figur 10: ein weiteres Ausführungsbeispiel eines Rangierfahrzeugs mit differentiellem Antrieb.

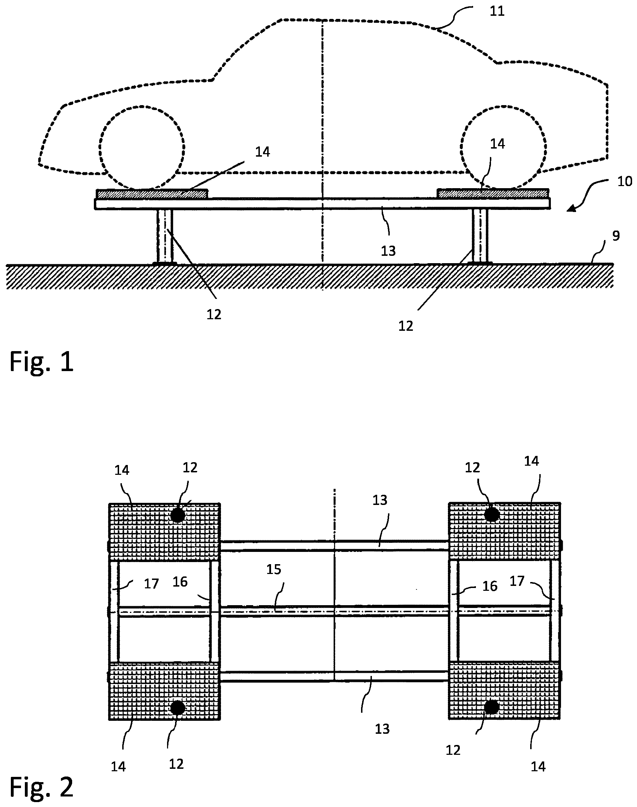

In Fig. 1 ist eine Palette 10 mit einem darauf abgestellten Fahrzeug 11 dargestellt. Die Palette 10 besitzt seitliche Stützen 12, mittels der sie und das darauf abgestellte Fahrzeug 11 gegenüber dem Geschossboden 9 einer Parketage erhöht gelagert ist. Seitliche Längsholme 13 bilden zusammen mit in Fig. 1 nicht dargestellten Querholmen eine tragende Rahmenstruktur, welche am vorderen und hinteren Ende jeweils vier Trägerflächen 14 aufweist, auf denen die Räder des einzulagernden Fahrzeugs 11 zu stehen kommen.

Die Trägerflächen 14 sind so ausgestaltet und bemessen, dass Fahrzeuge mit allen üblicherweise auftretenden Achsständen darauf abgestellt werden können. Im Rahmen der vorliegenden Erfindung ist es aber auch möglich, verschiedene Paletten für unterschiedliche Fahrzeugtypen vorzuhalten und bei Bedarf anhand eines ermittelten oder vom Benutzer angegebenen Achsstandes die geeignete Palette zur Verfügung zu stellen.

Eine Draufsicht auf die Palette 10 aus Fig. 1 ist auch in Fig. 2 gezeigt. Die beiden seitlichen Längsholme 13 verbinden an beiden Enden jeweils innere und äußere Querträger 16, 17, auf denen die Trägerfläche 14 aufgeschweißt sind. Zur weiteren Versteifung weist die Palette 10 einen zusätzlichen mittleren Längsträger 15 auf. Unterhalb der Trägerfläche 14 sind im gezeigten Ausführungsbeispiel die Stützen 12 angebracht, auf denen die Palette 10 abgestellt wird.

Die Palette 10 weist wie gezeigt eine skelettierte Bauform auf, so dass sie in Leichtbauweise aus Stahlrohr bzw. Stahlprofilen oder auch aus Aluminiumprofilen hergestellt werden kann.

Die Längsträger 13 können anders als in den Figuren dargestellt auch eine leicht nach oben gebogene Form aufweisen, wodurch sich die Statik der Palette verbessern lässt. Anstelle der separat angebrachten Stützen 12 können auch die Enden der Längsträger 13 nach unten abgewinkelt werden und so als Stützen dienen. Ebenfalls im Rahmen der vorliegenden Erfindung ist es möglich, die Stützen 12 der Paletten ganz weg zu lassen, und die Paletten stattdessen auf stationären, mit dem Geschossboden 9 fest verbundenen Lagerböcken einzulagern.

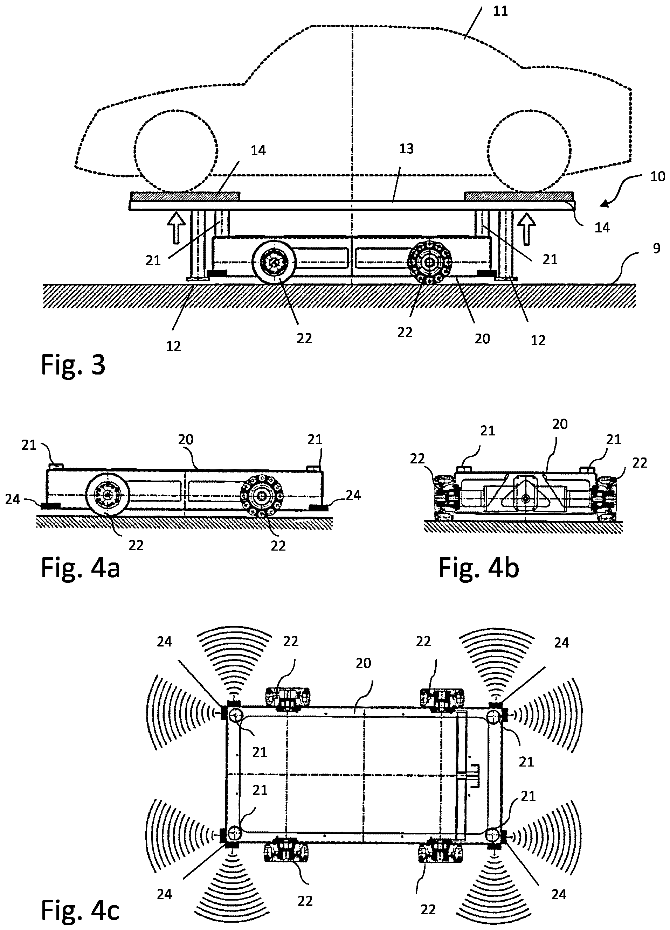

Wichtig ist im Zusammenhang mit der vorliegenden Erfindung lediglich, dass die Paletten 10 gegenüber dem Geschossboden erhöht gelagert werden, so dass sie von einem niederflurigen Rangierfahrzeug vollständig unterfahren und angehoben werden können. Diese Situation ist in Fig. 3 dargestellt. Ein Rangierfahrzeug 20 ist unter die Palette 10 mit dem darauf befindlichen Fahrzeug 11 gefahren und hat diese über vier hydraulische Hubstempel 21 so weit angehoben, dass die Stützen 12 den Geschossboden 9 nicht mehr berühren. Das Rangierfahrzeug 20 kann nun mit der Palette 10 und dem darauf abgestellten Fahrzeug 11 zu einem Stellplatz oder einem Übergabeplatz fahren und die Palette 10 dort wieder absenken. Seine hohe Rangierfähigkeit verdankt das Rangierfahrzeug 20 einem omnidirektionalen Antrieb, welcher im Ausführungsbeispiel durch vier sogenannte Mecanum-Räder gebildet wird. Anstelle von hydraulischen Hubstempeln können auch andere Arten von Hubvorrichtungen wie beispielsweise Hubscheren, Hubspindeln oder dergleichen eingesetzt werden.

Das Rangierfahrzeug 20 ist in den Figuren 4a bis 4c in verschiedenen Ansichten dargestellt. Die vier Mecanum-Räder 22 befinden sich seitlich an dem Rangierfahrzeug 20 und sind jeweils einzeln über einen zugehörigen Elektromotor angetrieben. An den Ecken des Rangierfahrzeugs 20 befinden sich die vier Hubstempel 21, mit denen eine unterfahrene Palette angehoben werden kann. Außerdem sind an den Ecken des Rangierfahrzeugs 20 an jeder Längs- bzw. Querseite je zwei Abstandssensoren 24 vorgesehen, mit deren Hilfe das Rangierfahrzeug 20 durch Messung seines Abstands zu Außenwänden der Parkgarage seine Position bestimmen kann, aber auch eventuelle Hindernisse erkennen und diesen ausweichen oder rechtzeitig anhalten kann. Bei der Verwendung von Lasersensoren kann es zudem hilfreich sein, an den Wänden der Parkgarage Reflektoren vorzusehen, um die Reichweite der sensorgestützten Abstandsmessung zu erhöhen.

Im Inneren des Rangierfahrzeugs ist neben der Antriebstechnik eine elektrische Energieversorgung, beispielsweise in Form von aufladbaren Lithium-Ionen-Batterien oder Hochleistungskondensatoren, sowie eine entsprechende Steuerung für die Antriebe und zur Navigation des Rangierfahrzeugs untergebracht. Außerdem verfügt das Rangierfahrzeug über eine in den Figuren nicht dargestellte Drahtlosschnittstelle, über die es Steuerbefehle von einer zentralen Steuerung des Parksystems erhalten kann und Bestätigungsmeldungen sowie eventuelle Alarm- und Fehlermeldungen an das zentrale Steuersystem senden kann.

Die zentrale Steuerung wird vorzugsweise mittels einer entsprechend programmierten Datenverarbeitungsanlage an sich bekannter Bauart realisiert. Neben der Zuweisung von Stellplätzen erteilt die Steuerung Anweisungen zum Ein- bzw. Auslagern von Fahrzeugen sowie erforderlichenfalls auch zum Umlagern von eingelagerten Fahrzeugen. Außerdem kann die Steuerung genutzt werden, um Zugangstore oder-schranken der Parkgarage anzusteuern und zum Ein- bzw. Ausfahren von Fahrzeugen zu öffnen bzw. zu schließen.

Das Rangierfahrzeug 20 ist so ausgebildet und bemessen, dass es unter einer Palette 10 zwischen deren Stützen 12 hindurchfahren kann. Der omnidirektionale Antrieb ermöglicht ein Millimeter genaues Positionieren des Rangierfahrzeugs 20 auch unter Last, sowie eine Bewegung des Rangierfahrzeugs 20 in jede beliebige Richtung in der Ebene einer Parketage, insbesondere in x-y-Richtung eines gedachten Koordinatensystems, bzw. entlang von Transportgassen und in hierzu senkrecht angeordnete Lagergassen hinein.

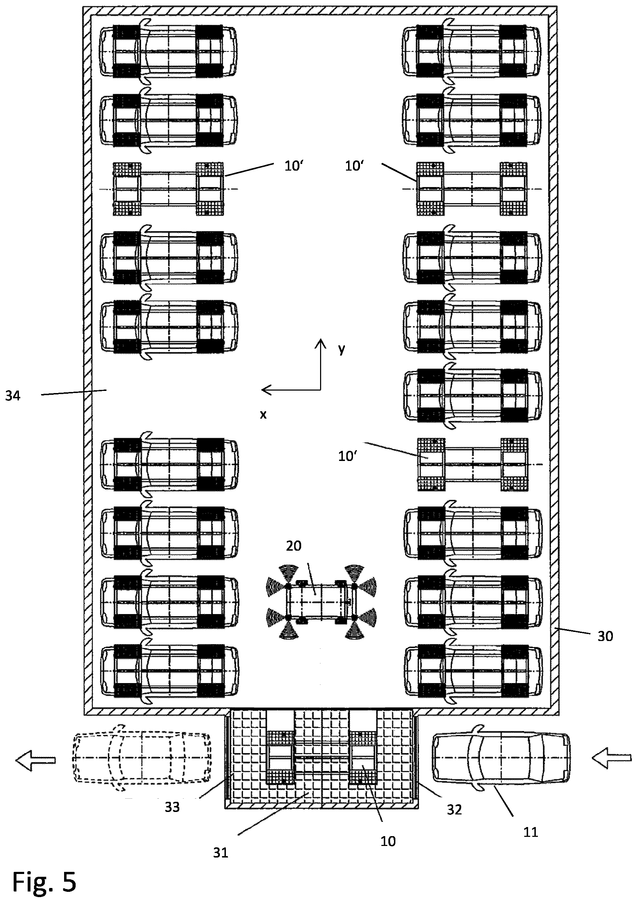

Der Betrieb eines entsprechenden Parksystems bei einer Parkgarage 30 ist Fig. 5 beispielhaft dargestellt. Die Parkgarage 30 weist einen abgeschlossenen Übergaberaum 31 auf, in den ein Fahrzeug 11 durch ein verschließbares Tor 32 auf eine dort abgestellte Leerpalette 10 auffahren kann. Der Boden des Übergaberaums 11 ist gegenüber dem Niveau der Parkgarage 30 um die Höhe der Palette 10 mit deren Stützen erhöht und befindet sich auf dem Niveau der externen Fahrbahn. Er weist Aussparungen auf in welche die Palette und insbesondere deren Trägerbleche 14 eingesetzt werden können, so dass das Fahrzeug 11 ebenerdig auf die Palette 10 auffahren kann.

Ist das Fahrzeug 11 aufgefahren und auf der Palette 10 sicher abgestellt, so wird die Palette 10 von dem Rangierfahrzeug 20 unterfahren und von den Hubstempeln 21 des Rangierfahrzeugs 20 so weit angehoben, dass die Palette aus den Ausnehmungen im Boden des Übergaberaums 31 herausgefahren werden kann. Das Rangierfahrzeug 20 fährt dann mit der aufgenommenen Palette 10 und dem darauf abgestellten Fahrzeug 11 in y-Richtung bis auf Höhe eines leeren Stellplatzes 34 und dann in x-Richtung in die Lücke zwischen den bereits eingelagerten Fahrzeugen auf den Stellplatz 34. Dort wird die Palette 10 abgestellt. Das Rangierfahrzeug 20 kann dann zu einer der weiteren, auf entsprechenden Stellplätzen abgestellten Leerpaletten 10' fahren, diese aufnehmen und zu dem Übergaberaum 31 verbringen, so dass ein weiteres Fahrzeug 11 eingelagert werden kann. Wenn keine weiteren Aufgaben anliegen, kann das Rangierfahrzeug 20 zu einer Ruheposition (nicht gezeigt) fahren, an der eine Ladevorrichtung installiert ist, mit der es sich zum Laden seiner Batterien verbinden kann.

Soll ein Fahrzeug ausgelagert werden, so begibt sich das Rangierfahrzeug 20 zu dem betreffenden Stellplatz, unterfährt die Palette, auf der sich das betreffende Fahrzeug befindet und hebt diese an. Es fährt dann mit der angehobenen Palette in x-Richtung bis zu der Rangiergasse und dann in y-Richtung bis in den Übergaberaum 31. Gegebenenfalls muss zuvor eine im Übergaberaum 31 befindliche Leerpalette 10 abtransportiert und wieder zu einem leeren Stellplatz verbracht werden. Wenn das betreffende Fahrzeug in den Übergaberaum 31 gebracht wurde, wird das Ausfahrttor 33 geöffnet und der Benutzer kann sein Fahrzeug in Empfang nehmen und ausfahren.

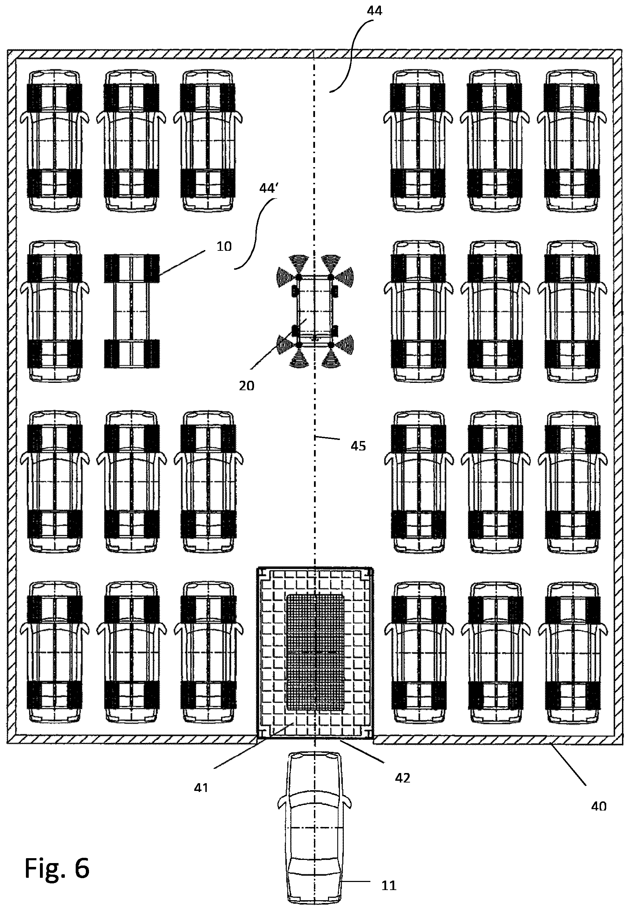

Ein zweites Ausführungsbeispiel für ein erfindungsgemäßes Parksystem ist in Fig. 6 gezeigt. In der dort abgebildeten Parkgarage 40 werden auf Paletten 10 abgestellte Fahrzeuge 11 ausgehend von einer Transportgasse entlang der Mittellinie 45 in Lagergassen zu je drei Fahrzeugen, die seitlich nebeneinander abgestellt werden, eingelagert. Wie aus der Zeichnung ersichtlich, ist jeweils immer nur das von der Transportgasse aus gesehen erste Fahrzeug in einer Lagergasse direkt zugänglich ist. Soll ein in einer Lagergasse weiter hinten eingelagertes Fahrzeug ausgelagert werden, so können jedoch Paletten mit den weiter davor befindlichen Fahrzeugen so umgelagert werden, dass das weiter hinten befindliche Fahrzeug zugänglich wird.

Für das Umlagern ist von besonderem Vorteil, dass die Paletten 10 so gestaltet sind, dass das Rangierfahrzeug 20 unter einer abgestellten Palette hindurch fahren kann, und zwar sowohl in Quer- als auch in Längsrichtung. Auf diese Weise kann ein Umlagern in der Art eines Schiebepuzzles erfolgen, wobei beispielsweise die Leerstelle 44 am Ende der Transportgasse als zusätzliche Rangierfläche zum temporären Umlagern von Paletten mit genutzt werden kann. Auf diese Weise kann der zur Verfügung stehende Parkraum besonders effizient ausgenutzt werden. Um die Zugriffszeiten zu erhöhen und ein gegebenenfalls erforderliches Umlagern zu beschleunigen ist es außerdem vorteilhaft, mit zwei oder mehr Rangierfahrzeugen 20 gleichzeitigt zu arbeiten.

Will, wie im Ausführungsbeispiel gezeigt, ein Fahrzeug 11 in die Parkgarage 40 einfahren, so muss das Rangierfahrzeug 20 zunächst die einzige in Fig. 6 gezeigte Leerpalette 10 von ihrem Stellplatz abholen und in dem Übergaberaum 41 abstellen. Daraufhin öffnet sich das Zufahrtstor 42 der Parkgarage 40 und das Fahrzeug 11 kann über eine Rampe (nicht gezeigt) auf die Leerpalette 10 auffahren. Das Rangierfahrzeug 20 wird die Palette mit dem Fahrzeug 11 dann wieder anheben und zu ihrem ursprünglichen Stellplatz zurücktransportieren. Der davor befindliche Stellplatz 44' bleibt in diesem Fall frei und steht als Ausweichfläche für ein gegebenenfalls erforderliches Umlagern zur Verfügung.

In den gezeigten Ausführungsbeispielen wurde jeweils nur eine Parketage betrachtet. Selbstverständlich können jedoch die gezeigten Parkgaragen 30, 40 auch mehrstöckig ausgeführt und mit einer Aufzugsanlage, vorzugsweise einer hydraulischen Hubplattform ausgestattet sein. Die Aufzugsanlage kann beispielsweise am Übergabeplatz 31 bzw. 41 installiert werden. Wird die Aufzugsanlage mit einer geschlossenen Aufzugskabine versehen, so steht gleichzeitig ein allseitig abgeschlossener Übergaberaum zur Verfügung, so dass ein Benutzer bei Einlieferung bzw. Abholung seines Fahrzeuges keinen Zugang zu den Parketagen selbst hat.

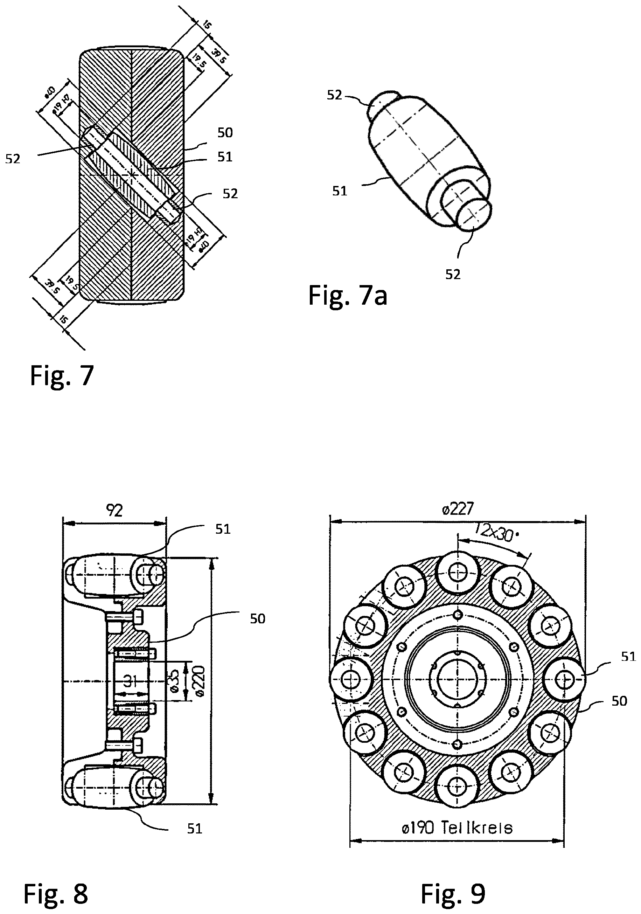

Im Folgenden wird anhand der Figuren 7, 8 und 9 das bei dem Rangierfahrzeug verwendete Prinzip des omnidirektionalen Antriebs näher erläutert. Kernstück des omnidirektionalen Antriebs ist eine spezielle Radkonstruktion, welche auch als omnidirektionales Rad bezeichnet wird, mit dem das Rangierfahrzeug jederzeit in eine beliebige Richtung fahren kann. Hierbei sind auf der Umlauffläche eines Hauptrades weitere, vorzugsweise tonnenförmige Hilfsräder angebracht, deren Drehachsen in einem Winkel zur Drehachse des Hauptrades liegen. Die genaue Geometrie und Anordnung der Räder und ihrer Ansteuerungen bestimmen das Fahrverhalten des Rangierfahrzeugs. Die einzelnen Räder des Rangierfahrzeugs werden getrennt und unabhängig voneinander durch Elektromotoren angetrieben und ermöglichen so omnidirektionale Fahrmanöver, ohne eine mechanische Lenkung zu benötigen. Eine besondere Form eines omnidirektionalen Rades ist das sogenannte Mecanum-Rad, welches in den hier gezeigten Ausführungsbeispielen der Erfindung zum Einsatz kommt.

Bei einem Mecanum-Rad sind auf der Umlauffläche des Rades mehrere drehbar gelagerte, tonnenförmige Rollen unter einem Winkel von vorzugsweise 45° Grad zur Achse des Rades angebracht. Diese Rollen stellen den Kontakt zum Boden her. Die Rollen haben keinen direkten Antrieb und können sich frei um ihre schräge Lagerachse drehen. Jedes der vier Mecanum-Räder wird hierbei von einem Antriebsmotor mit veränderlichem Drehsinn und variabler Drehzahl angetrieben. In Fig. 7 ist schematisch eine Aufsicht auf die Lauffläche eines Mecanum-Rades 50 gezeigt. Von den tonnenförmigen Rollen 51, die entlang der Umlauffläche des Mecanum-Rades 50 verteilt sind, ist hier beispielhaft nur die vorderste in einem Schnitt gezeigt. Die beiden Enden der Rolle 51 laufen zu Lagerzapfen 52 aus, die mittels entsprechender Lager am Umfang des Rades frei drehbar gelagert sind. Eine vergrößerte Darstellung einer solchen Rolle 51 ist in Fig. 7a in einer isometrischen Ansicht gezeigt.

Fig. 8 zeigt einen Längsschnitt durch das Mecanum-Rad 50 und Fig. 9 zeigt einen Querschnitt senkrecht zur Radachse. Insgesamt sind entlang der Umlauffläche zwölf Rollen 51 verteilt angeordnet, wobei die Rollen jeweils den einzigen Kontakt des Mecanum-Rades zum Boden herstellen.

Die vier Mecanum-Räder des Rangierfahrzeugs 20 sind so angeordnet, dass die Achsen der geneigten Rollen sternförmig zur Fahrzeugmitte zeigen. Durch geeignete Wahl von Drehzahl und Drehrichtung eines jeden Rades entstehen gegenüber dem Boden Kraftvektoren, die sich durch die beweglichen Rollen in zwei Richtungen ausbilden, sich jedoch in der Summe mit den Kraftvektoren der anderen Räder zu einer Gesamtbewegungsrichtung oder einem Gesamtdrehmoment für das Fahrzeug summieren. Je nach Richtung der Kräfte werden teils die Rollen auf dem Untergrund in Drehung versetzt oder durch das Rad, auf dem sie sich befinden abgerollt ohne dass die Rollen sich dabei drehen, letzteres beispielsweise bei Vorwärts-Geradeausfahrt. Durch gegensätzlichen Drehsinn der Räder der Vorder- und Hinterachsen kann das so angetriebene Rangierfahrzeug quer fahren, ohne sich dabei in eine Längsrichtung vorwärts oder rückwärts zu bewegen oder eine Drehung auszuführen.

Alternativ zu omnidirektionalen Rädern können im Rahmen der vorliegenden Erfindung für den omnidirektionalen Antrieb wie eingangs erwähnt auch sogenannte Fahr-Dreh-Module verwendet werden, also integrierte Baugruppen, bei denen jeweils ein klassisches Antriebsrad vorgesehen ist, welches zusätzlich aktiv um seine Hochachse gedreht und ausgerichtet werden kann.

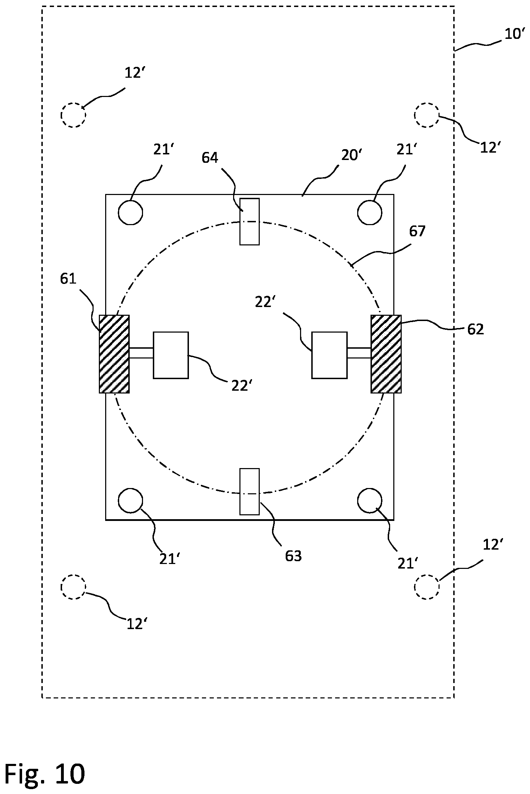

Schließlich zeigt Figur 10 ein weiteres Ausführungsbeispiel, bei dem ein Rangierfahrzeug 20' mit einem differentiellen Antrieb ausgestattet ist. Das Rangierfahrzeug 20' verfügt über zwei bezüglich der Längsseiten in etwa mittig angeordnete angetriebene Räder 61, 62, sowie zwei jeweils in etwa mittig bezüglich der Querseiten angeordnete Stützräder 63, 64, welche als um ihre Hochachse frei drehbare Lenkrollen ausgebildet sind. Die Räder 61, 62 werden jeweils separat mit einem zugehörigen Antrieb 22' verbunden. Die Antriebe 22' können unabhängig von einander sowohl in Vorwärts- als auch in Rückwärtsrichtung betrieben werden. Werden die beiden Räder 61, 62 gegensinnig and gleichschnell angetrieben, so dreht sich das Rangierfahrzeug auf der Stelle um den gedachten, strichpunktiert gezeichneten Wendekreis 67. Die Lenkrollen 63, 64 folgen durch Drehung um ihre jeweilige Hochachse jeder Bewegung und Stabilisieren das Rangierfahrzeug gegen Kippen.

Das Rangierfahrzeug 20' ist mit vier Hubstempeln 21' ausgestattet, mit denen eine unterfahrene Palette 10' angehoben werden kann. Eine Palette 10' mit ihren Stützen 12' ist hier nur gestrichelt angedeutet.

Der differentielle Antrieb 22' erlaubt zwar, das Rangierfahrzeug 20' auf der Stelle zu drehen, ermöglicht aber keine seitliche Fortbewegung wie ein omnidirektionaler Antrieb. Das Rangierfahrzeug 20' wird daher so angesteuert, dass für eine seitliche Bewegung einer aufgenommenen Palette 10' die Palette 10' zunächst abgesetzt wird, das Rangierfahrzeug 20' unter der Palette dann eine Drehung auf der Stelle um 90° ausführt und die Palette 10' anschließend wieder anhebt. Nun kann das Rangierfahrzeug 20' die Palette 10' in seitlicher Richtung versetzen. Soll die Palette 10' im Anschluss an eine seitliche Bewegung wieder in Längsrichtung weiterbewegt werden, so wird die Palette 10' erneut abgesetzt, wieder eine Drehung des Rangierfahrzeugs 20' um 90° ausgeführt und die Palette dann wieder aufgenommen.

Vorteilhaft ist hierbei, wenn an der Palette 10' Aufnahmen für die Hubstempel 21' vorgesehen sind, so dass die Palette 10' nur in fest definierten Orientierungen vom Rangierfahrzeug 20' aufgenommen werden können. Das Rangierfahrzeug 20' ist hierzu mit Sensoren ausgestattet, welche vor einem Anheben erkennen, ob die Orientierung des Rangierfahrzeugs 20' bezüglich der Aufnahmen an der Palette übereinstimmt und die Hubstempel sicher in die Aufnahmen greifen und so sicherstellen, dass die Palette nur in der vordefinierten Orientierung bzw. Position aufgenommen werden kann.

## Patentansprüche

1. Automatisiertes Parksystem für Fahrzeuge, bei dem ein zu parkendes Fahrzeug (11) an einem Übergabeplatz (31, 41) auf einer Palette (10, 10') abgestellt und die Palette (10, 10') dann von einer mechanischen Einrichtung (20, 20') übernommen und zu einem Stellplatz (34) innerhalb einer Parkgarage (30) verbracht wird, umfassend
- eine Vielzahl von Paletten (10, 10'), die auf Stellplätzen des Parksystems derart gegenüber einem Geschossboden erhöht einlagerbar sind, dass sie von einem niederflurigen Rangierfahrzeug (20, 20') unterfahren werden können, und
- mindestens ein robotisch gesteuertes, niederfluriges Rangierfahrzeug (20, 20') zum Transport der Paletten (10, 10'), wobei das Rangierfahrzeug (20, 20') einen omnidirektionalen oder differentiellen Antrieb (22, 61, 62) aufweist und mit einer vorzugsweise hydraulischen Hubvorrichtung (21, 21') ausgestattet ist, um eine unterfahrene Palette (10, 10') anzuheben,
**dadurch gekennzeichnet, dass**
- das Rangierfahrzeug (20, 20') mit Abstandssensoren (24) zur Standortbestimmung des Rangierfahrzeuges (20, 20') durch Abstandsmessung zu Außenwänden der Parkgarage (30) ausgestattet ist.

2. Automatisiertes Parksystem nach Anspruch 1, bei dem das Rangierfahrzeug (20) als Antrieb einzeln ansteuerbare Radantriebe mit omnidirektionalen Rädern (22) aufweist.

3. Automatisiertes Parksystem nach Anspruch 2, bei dem die omnidirektionalen Räder (22) als Mecanum-Räder (50) ausgebildet sind.

4. Automatisiertes Parksystem nach einem der vorangehenden Ansprüche, umfassend eine mehrgeschossige Lagerhalle (30, 40) mit einer vorzugsweise hydraulischen Aufzugsanlage, welche eine Hubplattform oder Aufzugskabine aufweist, die von dem Rangierfahrzeug (20) befahrbar ist.

5. Automatisiertes Parksystem nach Anspruch 4, bei dem ein Aufzugsschacht mit entsprechend positionierter Hubplattform oder Aufzugskabine der Aufzugsanlage als Übergaberaum zur Einlieferung und Abholung eines zu parkenden Fahrzeugs (11) dient.

6. Automatisiertes Parksystem nach einem der vorangehenden Ansprüche, bei dem an dem Übergabeplatz (31, 41) eine Rampe vorgesehen ist, welche derart ausgebildet ist, dass ein zu parkendes Fahrzeug (11) auf eine am Übergabeplatz (31, 41) aufgestellte Palette (10) auffahren kann.

7. Automatisiertes Parksystem nach einem der vorangehenden Ansprüche, bei dem das Rangierfahrzeug (20) batteriebetrieben ist und eine Ladevorrichtung vorgesehen ist, mit der das Rangierfahrzeug (20) in einer Wartestellung koppelbar ist.

8. Automatisiertes Parksystem nach einem der vorangehenden Ansprüche, bei dem das Rangierfahrzeug (20) mittels Hochleistungskondensatoren betrieben ist und mindestens eine induktive oder taktile Ladevorrichtung vorgesehen ist, welche ausgebildet ist, die Hochleistungskondensatoren während einer Überfahrt des Rangierfahrzeugs (20) zu laden.

9. Automatisiertes Parksystem nach einem der vorangehenden Ansprüche, bei dem das Rangierfahrzeug (20) an jeder Längs- bzw. Querseite je zwei Abstandssensoren (24) aufweist.

10. Automatisiertes Parksystem nach einem der vorangehenden Ansprüche, bei dem zwei oder mehr Rangierfahrzeuge (20) vorgesehen sind, welche gleichzeitig und/oder abwechselnd den Transport von Paletten (10) zwischen dem Übergabeplatz (31, 41) und den verschiedenen Stellplätzen (34) ausführen.

11. Automatisiertes Parksystem nach einem der vorangehenden Ansprüche, welches eine zentrale Steuerung aufweist, die per drahtloser Datenübertragung mit dem mindestens einen Rangierfahrzeug (20) kommuniziert und ausgebildet ist, zu parkenden Fahrzeugen (11) Stellplätze (34) zuzuweisen und zum Auslagern eines Fahrzeuges (11) den betreffenden Stellplatz, auf dem die Palette (10) mit diesem Fahrzeug eingelagert ist, zu ermitteln.

12. Automatisiertes Parksystem nach Anspruch 10, bei dem die Paletten (10) in Gassen hintereinander eingelagert werden und die zentrale Steuerung ausgebildet ist, bei Bedarf Paletten (10) umzulagern, um Zugang zu weiter hinten in einer Gasse eingelagerten Paletten (10) zu schaffen.

13. Automatisiertes Parksystem nach einem der vorangehenden Ansprüche, welche angepasst ist, mit Hilfe des Rangierfahrzeugs (20) eine Palette (10) mit einem auszulagernden Fahrzeug (11) von einem betreffenden Stellplatz zurück zu dem Übergabeplatz (31, 41) zurück zu transportieren und dort um 180° gegenüber einer Einfahrtrichtung gedreht abzustellen.

14. Automatisiertes Parksystem nach einem der vorangehenden Ansprüche, bei dem Rangierfahrzeug (20) und Paletten (10) so ausgebildet sind, dass das Rangierfahrzeug (10) unter einer abgestellten Palette (10) hindurchfahren kann.

15. Automatisiertes Parksystem nach einem der vorangehenden Ansprüche, bei dem das Rangierfahrzeug (20') einen differentiellen Antrieb mit zwei entlang einer Querachse angeordneten angetriebenen Rädern (61, 62) aufweist, die über zugehörige Antriebe (22') getrennt und unabhängig voneinander angetrieben sind, sowie mindestens ein um seine Hochachse frei drehbares Stützrad (63, 64) aufweist.

16. Automatisiertes Parksystem nach Anspruch 15, bei dem das das Rangierfahrzeug (20') angepasst ist, zum seitlichen Versetzen einer in Längsrichtung aufgenommenen Palette (10'), die Palette (10') abzusetzen, unterhalb der Palette (10') eine Drehung auf der Stelle um 90° auszuführen und die Palette (10') in der neuen Orientierung wieder anzuheben.

17. Niederfluriges, robotisch gesteuertes Rangierfahrzeug (20, 20') für ein Parksystem nach einem der vorangehenden Ansprüche, welches ausgebildet ist, von einem Geschossboden beabstandet gelagerte Paletten (10) zu unterfahren, umfassend einen omnidirektionalen oder differentiellen Antrieb (22; 22') und eine vorzugsweise hydraulische Hubvorrichtung (21, 21') zum Anheben einer unterfahrenen Palette (10, 10'), **dadurch gekennzeichnet, dass** es mit Abstandssensoren (24) zur Standortbestimmung durch Abstandsmessung zu Außenwänden einer Parkgarage (30) ausgestattet ist.

18. Verfahren zum Einlagern von Fahrzeugen (11) in einem automatisierten Parksystem, bei dem ein zu parkendes Fahrzeug (11)an einem Übergabeplatz (31, 41) auf einer Palette (11) abgestellt und die Palette (11) dann von einer mechanischen Einrichtung (20, 20') übernommen und zu einem Stellplatz (34) verbracht wird, wobei
- eine Vielzahl von Paletten (10, 10') auf Stellplätzen des Parksystems derart beabstandet von einem Geschossboden eingelagert werden, dass sie von einem niederflurigen Rangierfahrzeug (20, 20') unterfahren werden können, und dass
- mindestens ein robotisch gesteuertes, niederfluriges Rangierfahrzeug (20, 20') vorgehalten wird, welches zum Transport einer Palette (10) von dem Übergabeplatz (31, 41) zu einem Stellplatz (34) oder zurück, diese mittels eines omnidirektionalen oder differentiellen Antriebs (22, 22') unterfährt und mit Hilfe einer vorzugsweise hydraulischen Hubvorrichtung (21, 21') anhebt,
**dadurch gekennzeichnet, dass**
das Rangierfahrzeug (20, 20') mit Abstandssensoren (24) zur Standortbestimmung des Rangierfahrzeuges (20, 20') durch Abstandsmessung zu Außenwänden der Parkgarage (30) ausgestattet ist.

## Claims

1. Automated parking system for vehicles, wherein a vehicle (11) to be parked is placed on a pallet (10, 10') at a transfer station (31, 41) and the pallet (10, 10') is then taken up by a mechanical device (20, 20') and moved to a parking space (34) within a parking garage (30), comprising
- a multiplicity of pallets (10, 10') which are arranged to be stored on parking spaces of the parking system in an elevated position relative to a floor in such a way that a low-floored manoeuvring vehicle (20, 20') can be driven under them, and
- at least one robotically controlled, low-floored manoeuvring vehicle (20, 20') for transporting the pallets (10, 10'), the manoeuvring vehicle (20, 20') having an omnidirectional or differential drive (22, 61, 62) and being equipped with a preferably hydraulic lifting device (21, 21') in order to lift a pallet (10, 10') that has been driven under,
**characterised in that**
- the manoeuvring vehicle (20, 20') is equipped with distance sensors (24) for determining the location of the manoeuvring vehicle (20, 20') by measuring distance from outside walls of the parking garage (30).

2. Automated parking system according to claim 1, wherein the manoeuvring vehicle (20) has, as drive, individually actuatable wheel drives with omnidirectional wheels (22).

3. Automated parking system according to claim 2, wherein the omnidirectional wheels (22) are in the form of Mecanum wheels (50).

4. Automated parking system according to any one of the preceding claims, comprising a multi-storey storage building (30, 40) having a preferably hydraulic lift system which has a lifting platform or lift cabin onto or into which the manoeuvring vehicle (20) is drivable.

5. Automated parking system according to claim 4, wherein a lift shaft having an appropriately positioned lifting platform or lift cabin of the lift system serves as transfer space for delivery and pick-up of a vehicle (11) to be parked.

6. Automated parking system according to any one of the preceding claims, wherein a ramp is provided at the transfer station (31, 41), which ramp is configured in such a way that a vehicle (11) to be parked can be driven onto a pallet (10) disposed on the transfer station (31, 41).

7. Automated parking system according to any one of the preceding claims, wherein the manoeuvring vehicle (20) is battery-operated, and a charging device is provided to which the manoeuvring vehicle (20) can be coupled in a standby position.

8. Automated parking system according to any one of the preceding claims, wherein the manoeuvring vehicle (20) is operated by means of high-performance capacitors, and at least one inductive or tactile charging device is provided which is configured to charge the high-performance capacitors while the manoeuvring vehicle (20) is passing over it.

9. Automated parking system according to any one of the preceding claims, wherein the manoeuvring vehicle (20) has two distance sensors (24) on each longitudinal and transverse side.

10. Automated parking system according to any one of the preceding claims, wherein two or more manoeuvring vehicles (20) are provided which simultaneously and/or alternately effect the transportation of pallets (10) between the transfer station (31, 41) and the various parking spaces (34).

11. Automated parking system according to any one of the preceding claims, which has a central controller which communicates with the at least one manoeuvring vehicle (20) by wireless data transmission and is configured to allocate parking spaces (34) to vehicles (11) to be parked and, in order to retrieve a vehicle (11) from storage, to determine the respective parking space on which the pallet (10) having that vehicle is stored.

12. Automated parking system according to claim 10, wherein the pallets (10) are stored one behind the other in aisles, and the central controller is configured, when necessary, to relocate pallets (10) in order to provide access to pallets (10) stored further to the rear in an aisle.

13. Automated parking system according to any one of the preceding claims, which is adapted to transport, with the aid of the manoeuvring vehicle (20), a pallet (10) having a vehicle (11) to be retrieved from storage from a respective parking space back to the transfer station (31, 41) and to deposit it there, rotated through 180° with respect to an entry direction.

14. Automated parking system according to any one of the preceding claims, wherein the manoeuvring vehicle (20) and the pallets (10) are configured so that the manoeuvring vehicle (10) can pass under a deposited pallet (10).

15. Automated parking system according to any one of the preceding claims, wherein the manoeuvring vehicle (20') has a differential drive with two driven wheels (61, 62) which are arranged along a transverse axis and which are driven separately and independently of one another by means of associated drives (22'), and has at least one support wheel (63, 64) which is freely rotatable about its vertical axis.

16. Automated parking system according to claim 15, wherein for lateral displacement of a pallet (10') received in a longitudinal direction, the manoeuvring vehicle (20') is adapted to set down the pallet (10'), perform on the spot a rotation through 90° under the pallet (10') and lift the pallet (10') again in the new orientation.

17. Low-floored, robotically controlled manoeuvring vehicle (20, 20') for a parking system according to any one of the preceding claims, which is configured to drive under pallets (10) supported spaced apart from a floor, comprising an omnidirectional or differential drive (22; 22') and a preferably hydraulic lifting device (21, 21') for lifting a pallet (10, 10') that has been driven under, **characterised in that** it is equipped with distance sensors (24) for determining location by measuring distance from outside walls of a parking garage (30).

18. Method of storing vehicles (11) in an automated parking system, wherein a vehicle (11) to be parked is placed on a pallet (11) at a transfer station (31, 41), and the pallet (11) is then taken up by a mechanical device (20, 20') and moved to a parking space (34), wherein
- a multiplicity of pallets (10, 10') are stored on parking spaces of the parking system spaced apart from a floor in such a way that a low-floored manoeuvring vehicle (20, 20') can be driven under them, and
- at least one robotically controlled, low-floored manoeuvring vehicle (20, 20') is provided which, to transport a pallet (10) from the transfer station (31, 41) to a parking space (34) or back, drives under that pallet by means of an omnidirectional or differential drive (22, 22') and lifts the pallet with the aid of a preferably hydraulic lifting device (21, 21'),
**characterised in that**
the manoeuvring vehicle (20, 20') is equipped with distance sensors (24) for determining the location of the manoeuvring vehicle (20, 20') by measuring distance from outside walls of the parking garage (30).

## Revendications

1. Système automatisé de stationnement pour des véhicules, selon lequel un véhicule (11) à garer est déposé à un emplacement de transfert (31, 41) sur une palette (10, 10') et la palette (10, 10') est ensuite réceptionnée par un dispositif mécanique (20, 20') et amenée à un emplacement de stationnement (34) à l'intérieur d'un garage de stationnement (30), comprenant
- une pluralité de palettes (10, 10'), qui peuvent être entreposées sur des emplacements de stationnement du système de stationnement en étant surélevées par rapport à un sol d'étage de telle sorte qu'un véhicule de rangement surbaissé (20, 20') peut se déplacer en dessous d'elles, et
- au moins un véhicule de rangement surbaissé (20, 20'), commandé par robot et servant à transporter les palettes (10, 10'), sachant que le véhicule de rangement (20, 20') présente un entraînement omnidirectionnel ou différentiel (22, 61, 62) et est équipé d'un dispositif de levage (21, 21') de préférence hydraulique, afin de soulever une palette (10, 10') en dessous de laquelle il s'est déplacé,
**caractérisé en ce que**
- le véhicule de rangement (20, 20') est équipé de détecteurs de distance (24) afin de déterminer la position du véhicule de rangement (20, 20') en mesurant la distance par rapport aux parois extérieures du garage de stationnement (30).

2. Système automatisé de stationnement selon la revendication 1, selon lequel le véhicule de rangement (20) présente comme entraînement des entraînements de roues individuellement asservissables avec des roues omnidirectionnelles (22).

3. Système automatisé de stationnement selon la revendication 2, selon lequel les roues omnidirectionnelles (22) sont réalisées sous la forme de roues Mecanum (50).

4. Système automatisé de stationnement selon l'une des revendications précédentes, comprenant un entrepôt (30, 40) à plusieurs étages avec une installation d'élévateur de préférence hydraulique qui présente une plate-forme de levage ou une cabine d'élévateur sur laquelle le véhicule de rangement (20) peut circuler.

5. Système automatisé de stationnement selon la revendication 4, selon lequel une cage d'élévateur de l'installation d'élévateur, dotée d'une plate-forme de levage ou d'une cabine d'élévateur adéquatement positionnée, sert d'espace de transfert pour livrer et récupérer un véhicule (11) à garer.

6. Système automatisé de stationnement selon l'une des revendications précédentes, selon lequel une rampe est prévue à l'emplacement de transfert (31, 41), rampe qui est conçue de telle sorte qu'un véhicule (11) à garer peut venir se placer sur une palette (10) mise en place à l'emplacement de transfert (31, 41).

7. Système automatisé de stationnement selon l'une des revendications précédentes, selon lequel le véhicule de rangement (20) fonctionne sur batterie et il est prévu un dispositif de charge auquel le véhicule de rangement (20) peut être accouplé dans une position d'attente.

8. Système automatisé de stationnement selon l'une des revendications précédentes, selon lequel le véhicule de rangement (20) fonctionne au moyen de condensateurs à haute performance et il est prévu au moins un dispositif de charge inductif ou tactile qui est réalisé pour charger les condensateurs à haute performance pendant une traversée du véhicule de rangement (20).

9. Système automatisé de stationnement selon l'une des revendications précédentes, selon lequel le véhicule de rangement (20) présente deux détecteurs de distance (24) sur chaque côté longitudinal et sur chaque côté transversal.

10. Système automatisé de stationnement selon l'une des revendications précédentes, selon lequel il est prévu deux véhicules de rangement (20) ou davantage, qui réalisent simultanément et/ou alternativement le transport de palettes (10) entre l'emplacement de transfert (31, 41) et les différents emplacements de stationnement (34).

11. Système automatisé de stationnement selon l'une des revendications précédentes, qui présente une commande centrale qui communique par transmission de données sans fil avec le véhicule de rangement au moins unique (20) et qui est réalisée pour attribuer des emplacements de stationnement (34) à des véhicules (11) à garer et, afin de retirer un véhicule (11), pour déterminer l'emplacement de stationnement concerné, sur lequel est entreposée la palette (10) pourvue de ce véhicule.

12. Système automatisé de stationnement selon la revendication 10, selon lequel les palettes (10) sont entreposées les unes à la suite des autres dans des allées et la commande centrale est réalisée pour entreposer ailleurs des palettes (10) en cas de besoin, afin de créer l'accès à des palettes (10) entreposées plus en arrière dans une allée.

13. Système automatisé de stationnement selon l'une des revendications précédentes, qui est adapté pour, à l'aide du véhicule de rangement (20), transporter une palette (10) pourvue d'un véhicule (11) à retirer d'un emplacement de stationnement concerné en retour à l'emplacement de transfert (31, 41), et l'y déposer tournée à 180° par rapport à la direction d'entrée.

14. Système automatisé de stationnement selon l'une des revendications précédentes, selon lequel le véhicule de rangement (20) et les palettes (10) sont réalisés de telle sorte que le véhicule de rangement (20) peut passer en dessous d'une palette entreposée (10).

15. Système automatisé de stationnement selon l'une des revendications précédentes, selon lequel le véhicule de rangement (20') présente un entraînement différentiel avec deux roues motrices (61, 62) disposées le long d'un axe transversal, qui sont entraînées séparément et indépendamment l'une de l'autre au moyen d'entraînements associés (22'), et au moins une roue d'appui (63, 64) librement rotative autour de son axe vertical.

16. Système automatisé de stationnement selon la revendication 15, selon lequel le véhicule de rangement (20') est adapté pour, afin de déplacer latéralement une palette (10') prise en charge en direction longitudinale, déposer la palette (10'), effectuer en dessous de la palette (10') une rotation sur place de 90°, et soulever à nouveau la palette (10') dans la nouvelle orientation.

17. Véhicule de rangement surbaissé (20, 20') commandé par robot pour un système de stationnement selon l'une des revendications précédentes, qui est réalisé pour se déplacer en dessous de palettes (10) entreposées à distance d'un sol d'étage, comprenant un entraînement omnidirectionnel ou différentiel (22 ; 22') et un dispositif de levage (21, 21') de préférence hydraulique, afin de soulever une palette (10, 10') en dessous de laquelle ledit véhicule s'est déplacé, **caractérisé en ce qu'**il est équipé de détecteurs de distance (24) afin de déterminer sa position en mesurant la distance par rapport aux parois extérieures d'un garage de stationnement (30).

18. Procédé pour entreposer des véhicules (11) dans un système automatisé de stationnement, selon lequel un véhicule (11) à garer est déposé à un emplacement de transfert (31, 41) sur une palette (10) et la palette (10) est ensuite réceptionnée par un dispositif mécanique (20, 20') et amenée à un emplacement de stationnement (34), sachant
- qu'une pluralité de palettes (10, 10') sont entreposées sur des emplacements de stationnement du système de stationnement à une distance telle par rapport à un sol d'étage qu'un véhicule de rangement surbaissé (20, 20') peut se déplacer en dessous d'elles, et
- qu'il est prévu au moins un véhicule de rangement surbaissé (20, 20') commandé par robot qui, afin de transporter une palette (10) de l'emplacement de transfert (31, 41) à un emplacement de stationnement (34) ou en retour, se déplace en dessous de celle-ci au moyen d'un entraînement omnidirectionnel ou différentiel (22, 22') et la soulève à l'aide d'un dispositif de levage (21, 21') de préférence hydraulique,
**caractérisé en ce que**
le véhicule de rangement (20, 20') est équipé de détecteurs de distance (24) afin de déterminer la position du véhicule de rangement (20, 20') en mesurant la distance par rapport aux parois extérieures du garage de stationnement (30).
